# EUROPÄISCHE PATENTSCHRIFT

(11) **EP 2 350 675 B1**
(45) Veröffentlichungstag und Bekanntmachung des Hinweises auf die Patenterteilung: **19.04.2017**
(21) Anmeldenummer: 09756468.6
(22) Anmeldetag: 16.11.2009
(51) Int. Cl.: G01N 35/04, G01N 35/10, G01B 7/00

(54) **AUTOMATISIERTE ANALYSEVORRICHTUNG MIT EINER AUTOMATISCHEN PIPETTIERVORRICHTUNG UND MIT EINER MESSVORRICHTUNG ZUM BESTIMMEN DER POSITION DER PIPETTIERNADELSPITZE**
AUTOMATED ANALYTICAL DEVICE COMPRISING AN AUTOMATIC PIPETTING DEVICE AND A MEASURING DEVICE FOR DETERMINING THE POSITION OF THE PIPETTING NEEDLE TIP
DISPOSITIF D'ANALYSE AUTOMATISÉ COMPORTANT UN DISPOSITIF AUTOMATIQUE DE PRÉLÈVEMENT PAR PIPETTE ET UN DISPOSITIF DE MESURE POUR DÉTERMINER LA POSITION DE LA POINTE DE L'AIGUILLE DE PRÉLÈVEMENT PAR PIPETTE

(30) Priorität: 18.11.2008 DE 102008058065
(43) Veröffentlichungstag der Anmeldung: 03.08.2011
(73) Patentinhaber: Diasys Technologies S.A.R.L., 34790 Grabels (FR)
(72) Erfinder: SCHENK, Roland, 67281 Kirchheim (DE)
(74) Vertreter: WSL Patentanwälte Partnerschaft mbB
(86) Internationale Anmeldenummer: PCT/EP2009/065252
(87) Internationale Veröffentlichungsnummer: WO 2010/057861

(56) Entgegenhaltungen:
- US-A- 5 317 351
- US-A- 5 529 754
- US-A- 5 635 135
- US-A1- 2002 021 222
- US-A1- 2008 240 984

## Beschreibung

Die vorliegende Erfindung betrifft eine automatische Pipettiervorrichtung mit einer in einem dreidimensionalen Arbeitsbereich auf wenigstens einer horizontalen Arbeitsebene bewegbaren, im wesentlichen senkrecht zu der horizontalen Arbeitsebene angeordneten Pipettiernadel aus elektrisch leitfähigem Material, und mit einer Messvorrichtung zum Bestimmen der exakten Position der Pipettiernadelspitze auf der wenigstens einen horizontalen Arbeitsebene. Darüber hinaus betrifft die vorliegende Erfindung eine automatisierte Analysevorrichtung mit einer solchen automatischen Pipettiervorrichtung und ein Verfahren zum Spülen einer Pipettiernadel einer solchen automatischen Pipettiervorrichtung.

Im Rahmen der zunehmenden Automatisierung auf dem Gebiet der medizinischen und veterinärmedizinischen Diagnostik wurden u.a. Vorrichtungen für die automatisierte Analyse von Flüssigkeiten, sogenannte Analysatoren, entwickelt, die die verschiedenen für die Durchführung einer Analyse erforderlichen Reagenzien aus Reagenzienbehältern entnehmen und mit einer Probe zum Zwecke der Durchführung der Analyse in einem Reaktionsgefäß vereinigen können. Hierfür weisen die Analysatoren häufig ein Karussell auf, in dem entweder Aufnahmebereiche für Reagenzienbehälter oder Aufnahmebereiche für Probenbehälter vorgesehen sind. In besonderen Analysatorenkarussells sind sowohl Aufnahmebereiche für Reagenzienbehälter als auch Aufnahmebereiche für Probenbehälter vorgesehen. Solche Karussells werden üblicherweise von einer in dem Analysator vorgesehenen Antriebsvorrichtung zur Ausführung einer Drehbewebung des Karussells angetrieben.

Die Entnahme von Reagenz bzw. Probe und das Überführen in ein Reaktionsgefäß wird üblicherweise von einer automatischen Pipettiervorrichtung vorgenommen. Eine solche automatische Pipettiervorrichtung umfasst in der Regel einen Pipettierarm, an dem eine Pipettiernadel senkrecht angeordnet ist, die mit einer Pumpeinheit verbunden ist, mit der eine Flüssigkeit in die Pipettiernadel aufgezogen und aus der Pipettiernadel auch wieder ausgestoßen werden kann. Ein solcher Pipettierarm ist in der Regel so ausgestaltet, dass mit dem Pipettierarm die Pipettiernadel in einem Arbeitsbereich bewegt werden kann, in welchem Arbeitsbereich die Reagenzienbehälter, Probenbehälter und/oder Reaktionsgefäße (z. B. Küvetten) stationär angeordnet sind oder durch z. B. ein Karussell vorübergehend bereitgestellt werden und in die die Pipettiernadel eingetaucht werden kann.

Es gibt schwenkbare Pipettierarme, durch deren eines Ende eine Rotationsachse verläuft, um die sich das andere Ende des Pipettierarms auf einer Kreisbahn bewegen kann. Alternativ hierzu gibt es auch Pipettierarme, die sowohl in einer Richtung X als auch in einer senkrecht dazu angeordneten Richtung Y auf einer Ebene im Arbeitsbereich des Pipettierarms verfahrbar sind.

Pipettierarme können an Hubsäulen angeordnet sein, mit denen sie senkrecht zur Grundfläche des Arbeitsbereichs in der Arbeitshöhe verstellbar sind, um beispielsweise die Pipettiernadel über die in dem Arbeitsbereich angeordneten Flüssigkeitsbehälter bewegen zu können und die Pipettiernadel in ausgewählte Flüssigkeitsbehälter von oben einführen zu können. Alternativ zur Höhenverstellbarkeit über eine Hubsäule kann ein Pipettierarm auch so gestaltet sein, dass die Pipettiernadel selbst am Pipettierarm höhenverstellbar angeordnet ist.

Zwischen den einzelnen Pipettiervorgängen ist es regelmäßig erforderlich, die Pipettiernadel der automatischen Pipettiervorrichtung innen und außen zu reinigen. Hierfür wird die Pipettiernadel meist in eine Spülflüssigkeit eingetaucht, wobei eine bestimmte Menge an Spülflüssigkeit in die Pipettiernadel aufgezogen wird. Anschließend wird die Pipettiernadel aus der Spülflüssigkeit herausgezogen und über einem Abfallbehälter bzw. einem Abfluss entleert und abtropfen gelassen bzw. abgestreift.

Üblicherweise enthalten Analysatoren außerdem eine Messvorrichtung zum Bestimmen einer physikalischen oder chemischen Größe eines in einem Reaktionsgefäß angesetzten Reaktionsgemisches. Das Reaktionsgefäß kann z. B. eine Küvette sein, die im Strahlengang eines in dem Analysator angeordneten Photometers angeordnet ist oder eingebracht werden kann.

Darüber hinaus umfassen Analysatoren in der Regel wenigstens eine Steuerungseinheit zum Steuern der Bewegungen des Pipettierarms, der Pumpeinheit, der Pipettiernadel, der Hubsäule und/oder des Karussells, sowie eine Datenverarbeitungsvorrichtung zum Einrichten und Ausführen eines Analysenprogramms sowie zum Verarbeiten und Ausgeben einer gemessenen physikalischen oder chemischen Größe.

Die Öffnungen der Reagenzienbehälter bzw. Probenbehälter sowie die Öffnungen von Reaktionsgefäßen, aber auch die Öffnung einer gegebenenfalls vorgesehenen Pipettiernadelspülstation sind teilweise sehr klein ausgestaltet, so dass es vorkommen kann, dass bei einer Fehlfunktion der Steuerung die Pipettiernadel nicht wie vorgesehen in die Öffnung eines Behälters eingeführt wird, sondern auf den Behälterrand stößt oder möglicherweise sogar neben den Behälter und damit unter Umständen auf ein Bauteil des Analysators auftrifft. In diesen Fällen kann es zu einer Beschädigung der Pipettiernadel oder des Gegenstandes kommen, auf den die Pipettiernadel auftrifft. Solche Beschädigungen können so schwerwiegend sein, dass eine Fortführung des Analysendurchlaufs nicht mehr möglich ist.

Um einem unerwünschten Auftreffen der Pipettiernadel auf einen im Analysator angeordneten Gegenstand vorbeugen zu können, besteht daher ein Bedarf nach einer Vorrichtung zum Bestimmen der exakten Position der Pipettiernadelspitze im Arbeitsbereich der Pipettiernadel. Eine solche Vorrichtung wird im folgenden als Justage-Funktion bezeichnet. In US 5,529,754 wird eine automatisierte Pipettiervorrichtung beschrieben, die eine Steuereinrichtung aufweist, mit der die elektrische Kapazitanz zwischen einer Pipettiernadel und einem Referenzkörper gemessen werden kann, und die Mittel aufweist, mit denen die Referenzpositionskoordinaten der Pipettiernadel in wenigstens einer horizontalen Transportrichtung bestimmt werden können. US 2002/0021222 A1 beschreibt einen Sensor, mit dem die örtlich exakte Tropfenzuführung durch eine Mikropipette mit einem Messfeld mit mehreren punktförmigen, linearen oder flächigen Elektroden kontrolliert werden kann.

Es ist daher die Aufgabe der vorliegenden Erfindung, eine automatische Pipettiervorrichtung mit einer präzisen, zuverlässigen und leicht zu bediendenden Justage-Funktion bereitzustellen.

Diese Aufgabe wird gelöst durch eine automatische Pipettiervorrichtung mit einer Meßvorrichtung der eingangs genannten Art, wobei die Messvorrichtung
a) wenigstens einen elektrisch leitfähigen Messkörper umfaßt, der auf der wenigstens einen horizontalen Arbeitsebene angeordnet ist, und
b) eine mit einem Kondensator verbundene Kapazitätsmesseinrichtung zum Messen der elektrischen Kapazität des Kondensators umfaßt,
wobei die Pipettiemadeispitze eine erste Elektrode des Kondensators bildet und der wenigstens eine elektrisch teitfähige Messkörper eine zweite Elektrode des Kondensators bildet, und wobei die Messvorrichtung die besonderen Merkmale des kennzeichnenden Teils von Anspruch I aufweist.

Die elektrische Kapazität ist eine physikalische Größe die die Fähigkeit eines Kondensators, elektrische Energie zu speichern, definiert. Ein Kondensator besteht aus zwei elektrisch leitenden Flächen (Elektroden) mit elektrischen Anschlüssen und einem dazwischen befindlichen isolierenden Dielektrikum, wie z.B. Luft. Die Kapazität eines Kondensators ändert sich mit dem Abstand der Elektroden. So können Kondensatoren beispielsweise zur Abstands- und Dickenmessung verwendet werden, wenn sich der Elektrodenabstand in Abhängigkeit von einer Messgröße ändert.

Wird bei der vorliegenden Erfindung die Pipettiernadelspitze auf den Messkörper zu bewegt, geht dies mit einer Änderung der Kapazität des von Pipettiernadelspitze und Messkörper gebildeten Kondensators einher. Diese Kapazitätsänderung macht sich die vorliegende Erfindung zu Nutze, um entweder die exakte Position der Pipettiernadelspitze auf der wenigstens einen horizontalen Arbeitsebene im Arbeitsbereich der Pipettiernadel zu bestimmen. Diese Positionsbestimmung kann auf unterschiedliche Weise erfolgen.

Beispielsweise kann die Positionsbestimmung anhand der vorgegebenen Lage des Meßkörpers erfolgen. Weist der Messkörper auf der wenigstens einen horizontalen Arbeitsebene eine kreisförmige Fläche mit einem Durchmesser, der im wesentlichen dem Durchmesser der Pipettiernadelspitze entspricht, auf. Kann die Pipettiernadelspitze auf diesen Meßkörper exakt ausgerichtet werden, wird eine bestimmte Kapazität gemessen, was die erreichte exakte Ausrichtung der Pipettiernadelspitze auf den Meßkörper und damit die exakte Position der Pipettiernadelspitze auf der entsprechenden Arbeitsebene anzeigt. Weicht die gemessene Kapazität von dem für diesen Fall erwarteten Wert ab, ist auch die Position der Pipettiernadelspitze anders als erwartet.

Will man genauer wissen, wie die Pipettiernadelspitze auf der Arbeitsebene ausgerichtet ist, kann man mehrere Messkörper vorsehen, die in einer Anordnung gruppiert sind. Beispielsweise können die mehreren Meßkörper in ein Feld aus Messkörpern auf der wenigstens einen horizontalen Arbeitsebene, die alle eine kreisförmige Fläche mit einem Durchmesser, der im wesentlichen dem Durchmesser der Pipettiernadelspitze entspricht, aufweisen und die alle separat an eine jeweils zugehörige Kapazitätsmessvorrichtung angeschlossen sind. Je nachdem, zwischen welchem Meßkörper und der Pipettiernadelspitze eine bestimmte Kapazität gemessen wird, ist die Position der Pipettiernadelspitze.

Noch etwas genauer kann die Positionsbestimmung anhand der Form eines Meßkörpers mit einer größeren Fläche, über die die Pipettiernadel bewegbar ist, und anhand der Geschwindigkeit der Bewegung der Pipettiernadel über den Messkörper und der Zeit, über die eine bestimmte Kapazität gemessen werden kann, oder anhand der bei der Bewegung über den Meßkörper zurück gelegten Strecke erfolgen.

Bei der ersten Alternative der vorliegenden Erfindung gemäß Anspruch I weist die Messvorrichtung daher als zweite Elektrode neben der Pipettiernadel genau einen elektrisch leitlähigen Messkärper auf, der eine sich auf der wenigstens einen horizontalen Arbeitseberie erstreckende Oberfläche (F) aufweist, wobei die Oberfläche (F) ein Dreieck, ein Trapez, eine Raute oder ein Halbkreis ist.

Alternativ kann die Positionsbestimmung auch anhand der vorgegebenen Lage und Form des Meßkörpers und der von der Pipettiernadel bei der Bewegung in Richtung Meßkörper zurück gelegten Strecke oder der für das Erreichen des Meßkörpers bei gegebener Geschwindigkeit benötigten Zeit erfolgen. Beispielsweise kann der Messkörper ein elektrisch leitfähiger Draht sein, der auf der wenigstens einen horizontalen Arbeitsebene in einem vorgegebenen Winkel zu einer auf die horizontalen Arbeitsebene projezierten Bahn, auf der sich die Pipettiernadel durch den Arbeitsbereich bewegt, verläuft. Vorzugsweise ist zusätzlich ein zweiter Meßdraht vorgesehen, der auf der gleichen Ebene wie der erste Draht in einem Winkel zu dem ersten Draht, d.h. nicht parallel zu dem ersten Draht, verläuft.

Bei der zweiten Alternative der vorliegenden Erfindung gemäß Anspruch I umfaßt die Messvorrichtung wenigstens einen elektrisch leitfähigen Messkörper, der in einer Vertiefung in einer sich auf der wenigstens einen horizontalen Arbeitsebene im Arbeitsbereich erstreckenden Fläche angeordnet ist, wobei die Vertiefung in Draufsicht von oben einen dreiecks-, trapez-oder halbkreisförmigen Umfang auf, wobei der wenigstens eine Messkörper sich entlang des Umfangs der Vertiefung erstreckt und dabei einen Raum mit derselben Umfangsform, wie sie die Vertiefung aufweist umspannt. Hierdurch bildet der Messkärper zum inneren der Vertiefung hin eine Meßkante, an die eine in die Vertiefung eingeführte Pipettiernadel herangeführt werden kann.

Vorzugsweise weist die Vertiefung in Draufsicht von oben einen dreiecks-, trapez- oder halbkreisförmigen Umfang auf, wobei der wenigstens eine Messkörper sich entlang des Umfangs der Vertiefung erstreckt und dabei einen Raum mit derselben Umfangsform, wie sie die Vertiefung aufweist umspannt. Hierdurch bildet der Messkörper zum inneren der Vertiefung hin eine Meßkante, an die eine in die Vertiefung eingeführte Pipettiernadel herangeführt werden kann.

Bei einer alternativen Ausführungsform der Erfindung kann die Messvorrichtung statt auch eine mit einem elektrischen Schalter verbundene Spannungsquelle und eine mit dem elektrischen Schalter verbundene Kapazitätsmesseinrichtung oder Strommesseinrichtung zum Feststellen eines elektrischen Stromflußes über den Schalter umfassen, wobei die Pipettiernadelspitze einen ersten Kontakt des Schalters bildet und der wenigstens eine elektrisch leitfähige Messkörper einen zweiten Kontakt des Schalters bildet. Allerdings muß hierfür an die Pipettiernadel eine Spannung angelegt werden, was mit einer Reihe von Nachteilen verbunden sein kann.

Bei einer weiteren alternativen Ausführungsform der Erfindung kann die Bestimmung der Position der Pipettiernadelspitze auch über eine Widerstandmessung erfolgen. Vorzugsweise ist hierfür statt einer Kapazitätsmesseinrichtung ein Widerstandsmessgerät zur Messung des Widerstands an die Pipettiernadel und an den Messkörper angeschlossen. Bei großer Entfernung zwischen Pipettiernadelspitze und Meßkörper ist der Widerstand entsprechend groß. Bewegt sich die Pipettiernadel auf den Meßkörper zu, nimmt der Widerstand ab. Wird die Pipettiernadel sogar auf Kontakt mit dem Meßkörper gefahren geht der Widerstand entsprechend gegen Null. Allerdings muß auch hierbei an die Pipettiernadel eine Spannung angelegt werden, was mit einer Reihe von Nachteilen verbunden sein kann.

Bevorzugt ist bei der vorliegenden Erfindung jedoch die weiter oben beschriebene Kapazitätsmessung über die Kapazitätsmesseinrichtung.

Zweckmäßigerweise ist die Kapazitätsmesseinrichtung mit einer Datenverarbeitungseinheit zum Berechnen der exakten Position der Pipettiernadelspitze anhand der oben diskutierten vorgegebenen oder gemessenen Daten verbunden. Bei einer bevorzugten Ausführungsform ist diese Datenverarbeitungseinheit in dem Analysator integriert.

Zweckmäßigerweise sind der elektrisch leitfähige Messkörper und die Pipettiernadel gegenüber der automatischen Pipettiervorrichtung elektrisch isoliert. Bei einer bevorzugten Ausführungsform ist die Pipettiernadel an Masse angeschlossen, um Störkapazitäten zu vermeiden. Bei einer weiteren bevorzugten Ausführungsform ist der Meßkörper an Masse angeschlossen, um Störkapazitäten zu vermeiden. Besonders bevorzugt haben sowohl die Pipettiernadel als auch der Meßkörper einen Masseanschluß.

Grundsätzlich kann der elektrisch leitfähige Messkörper aus jedem elektrisch leitfähigen Material bestehen. Vorzugsweise besteht der wenigstens eine elektrisch leitfähige Messkörper aus Metall.

Bei einer bevorzugten Ausführungsform der Erfindung umfaßt die automatische Pipettiervorrichtung zusätzlich eine Spülstation zum Spülen der Pipettiernadel. Eine solche Spülstation umfaßt vorzugsweise wenigstens einen nach oben offenen Spülnapf, der eine Höhe (H) aufweist, die mindestens einer vorgegebenen maximalen Eintauchtiefe (T) der Pipettiernadel (27) in eine Proben- oder Reagenzienflüssigkeit während eines automatischen Pipettiervorgangs entspricht, und dessen Innenumfang (UW) größer als der Außenumfang (UP) der Pipettiernadel ist, wobei der Innenumfang (UW) des Spülnapfs höchstens dem 3-fachen, dem 2,5-fachen, dem 2-fachen oder dem 1,5-fachen Außenumfang (UP) des Bereichs der Pipettiernadel entspricht, der in den Spülnapf eingeführt werden soll.

Vorzugsweise ist bei dem wenigstens einen Spülnapf in dem Spülnapfboden oder unmittelbar darüber ein Spülnapfablauf angeordnet ist, wobei bei einer gegebenen Förderrate (Volumen pro Zeit) einer bestimmten Spülflüssigkeit durch die Pipettiernadel in den Spülnapf der hydraulische Ablaufwiderstand des Spülnapfablaufs so gewählt ist, dass die Förderrate der Spülflüssigkeit größer als die Ablaufrate (Volumen pro Zeit) der Spülflüssigkeit durch den Spülnapfablauf ist. Der hydraulische Ablaufwiderstand wird bestimmt durch die Beschaffenheit der inneren Oberfläche und die Geometrie, den Querschnitt und die Länge des Spülnapfablaufs.

Zweckmäßigerweise ist das Verhältnis des Innenumfangs (UW) des Spülnapfs zu dem Außenumfang (UP) der Pipettiernadel so gewählt, dass bei hinreichender Gesamtfördermenge an Spülflüssigkeit die Spülflüssigkeit in den Bereich zwischen der Außenwand der Pipettiernadel und der Innenwand des Spülnapfs steigt. Wird eine entsprechende Menge an Spülflüssigkeit durch die Pipettiernadel in den Spülnapf ausgestoßen, erfolgt dadurch nicht nur eine Reinigung der Pipettiernadel von innen, sondern auch eine Reinigung der Pipettiernadel von außen.

Vorzugsweise sind das Verhältnis UW/UP und Q so gewählt, dass bei einer gegebenen Förderrate einer bestimmten Flüssigkeit durch die Pipettiernadel in den Spülnapf und bei hinreichender Gesamtfördermenge an Spülflüssigkeit in dem Bereich zwischen der Außenwand der Pipettiernadel und der Innenwand des Spülnapfs in der Spülflüssigkeit turbulente Strömung auftritt.

Zweckmäßigerweise sind die Verhältnisse so gewählt, dass die turbulente Strömung entlang der Pipettiernadel über die gesamte vorgegebene maximale Eintauchtiefe (T) erreicht wird. Die turbulente Strömung hat den Vorteil, dass hiermit eine größere Reinigungswirkung erzielt wird als bei lediglich laminarer Strömung.

Vorzugsweise sind UW/UP und Q daher so gewählt, daß in dem Bereich zwischen der Außenwand der Pipettiernadel und der Innenwand des Spülnapfs in der Spülflüssigkeit eine Reynolds-Zahl von mindestens 2 500 erreicht wird. Noch bevorzugter wird eine Reynolds-Zahl von mindestens 100 000, von mindestens 200 000 oder gar von mindestens 250 000 erreicht.

Da der Innenumfang (UW) und damit auch die Öffnung eines Spülnapfs der erfindungsgemäßen Spülstation, durch die die Pipettiernadel in den Spülnapf zum Zwecke des Spülens eingeführt wird, möglichst klein zu halten ist, damit mit möglichst wenig Spülflüssigkeitsvolumen bei einer gegebenen Förderrate die gewünschte turbulente Strömung erzielt wird, muss allerdings sichergestellt sein, dass die Pipettiernadel beim Spülvorgang in diese kleine Öffnung trifft.

Mit der erfindungsgemäßen Justage-Vorrichtung zum Bestimmen der exakten Position der Pipettiernadelspitze im Arbeitsbereich der Pipettiernadel kann festgestellt werden, ob die Pipettiernadelspitze exakt genug über dem wenigstens einen Spülnapf ausgerichtet werden kann, um die Pipettiernadel in die schmale Spülnapföffnung einzuführen.

Vorzugsweise weist die Spülstation wenigstens 2 nebeneinander angeordnete, vorzugsweise wenigstens 3 in einer Reihe angeordnete Spülnäpfe auf. Bei diesen Ausführungsformen kann eine Datenverarbeitungseinrichtung anhand der von der Autojustage-Vorrichtung erhaltenen Daten entscheiden, in welchen der Spülnäpfe die Pipettiernadel (am besten) eingeführt werden kann, um die gewünschte Spülwirkung zu erzielen.

Besonders bevorzugt sind Spülstationen, bei denen wenigstens drei in einer Reihe angeordnete Spülnäpfe vorgesehen sind, wobei die Spülnapföffnungen auf einer horizontalen Ebene liegen. Darüber hinaus können auch mehr als drei Spülnäpfe auf einer durch deren zentrale Längsachse verlaufenden Gerade angeordnet sein, wobei die Spülnapföffnungen auf einer horizontalen Ebene liegen.

Im Falle eines Pipettierarms, der sowohl in X-Richtung als auch in einer senkrecht dazu angeordneten Richtung Y auf einer Ebene im Arbeitsbereich des Pipettierarms verfahrbar ist, sind die zwei oder mehr Spülnäpfe, die ihre Spülnapföffnungen im Arbeitsbereich des Pipettierarms auf einer gemeinsamen horizontalen Ebene haben, vorzugsweise so auf einer durch deren zentrale Längsachse verlaufenden Gerade angeordnet, dass diese Gerade in einem Winkel zu einer auf die Ebene der Spülnapföffnungen projezierten Bahn, auf der sich die Pipettiernadel durch den Arbeitsbereich bewegt, verläuft.

Im Falle eines schwenkbaren Pipettierarms, durch dessen eines Ende eine Rotationsachse verläuft, um die sich das andere Ende, an dem die Pipettiernadel angeordnet ist, auf einer Kreisbahn bewegt, ist die auf der Ebene, auf der die Spülnapföffnungen liegen, verlaufende Gerade, auf der die Kreismittelpunkte der Spülnäpfe liegen, eine Tangente der auf die Ebene der Spülnapföffnungen projezierten Kreisbahn, auf der sich die Pipettiernadel durch den Arbeitsbereich bewegt oder eine parallel zu dieser Tangente auf der Ebene der Spülnapföffnungen verlaufende Gerade.

Bei einer Spülstationanordnung mit mehreren Spülnäpfen, die in einer Reihe angeordnet sind, sind der Innenumfang UW der Spülnäpfe und der Umfang der Spülnapföffnungen und der Winkel, mit der die Gerade, auf der die Kreismittelpunkte der Spülnäpfe liegen, eine auf die Ebene der Spülnapföffnungen projezierte Bahn, auf der sich die Pipettiernadel durch den Arbeitsbereich bewegt, schneidet, so gewählt, dass eine Pipettiernadel, deren Spitze sich nicht auf der angenommenen idealen Bahn bewegt, dennoch in einen der Spülnäpfe eingeführt werden kann, sofern sich die tatsächliche Bahn, auf der sich die Pipettiernadel bewegt, in dem Bereich zwischen den äußersten Punkten der beiden äußersten Spülnapföffnungen verläuft. Dies wird beispielsweise erreicht, indem die Spülnapföffnungen in der Bewegungsrichtung der Pipettiernadel hintereinander versetzt angeordnet sind, wobei eine Pipettiernadelspitze, deren Bewegungsbahn nicht über die erste Spülnapföffnung verläuft, in jedem Fall über eine zweite Spülnapföffung verläuft, sofern die tatsächliche Bahn, auf der sich die Pipettiernadel bewegt, in dem Bereich zwischen den äußersten Punkten der beiden äußersten Spülnapföffnungen verläuft.

Die vorliegende Erfindung umfaßt auch ein Verfahren zum Bestimmen der exakten Position der Pipettiernadelspitze auf wenigstens einer horizontalen Arbeitsebene der Pipettiernadel einer automatischen Pipettiervorrichtung. Bei diesem Verfahren führt man die Schritte aus, bei denen man
a) eine im wesentlichen senkrecht zu einer horizontalen Arbeitsebene (40) angeordnete Pipettiernadel (27) aus elektrisch leitfähigem Material über eine sich auf der horizontalen Arbeitsebene (40) erstreckende Oberfläche (F) eines elektrisch leitfähigen Messkörper (42) bewegt,
b) eine zwischen der Pipettiernadelspitze (41) und dem elektrisch leitfähigen Messkörper (42) auftretende Kapazität mißt und
c) anhand der Zeit, über die eine Kapazität gemessen wird, anhand der Geschwindigkeit der Bewegung der Pipettiernadel (27) über den elektrisch leitfähigen Messkörper (42) und anhand der Anordnung oder der Form der Oberfläche (F) des elektrisch leitfähigen Messkörpers (42) oder anhand der Anordnung von mehreren elektrisch leitfähigen Messkörpern (42) die Kreisbahn, auf der sich die Pipettiernadelspitze (41) bewegt, bestimmt.

Außerdem umfaßt die vorliegende Erfindung auch ein Verfahren zum Spülen der Pipettiernadelspitze einer automatischen Pipettiervorrichtung, bei dem man
a) die Bahn, auf der sich die Pipettiernadelspitze (41) bewegt, nach dem in dem vorherigen Absatz beschriebenen Verfahren bestimmt und
b) anhand der in Stufe a) bestimmten Bahn festlegt, ob, wie und welcher Spülnapf (30, 30', 30") so angesteuert werden kann, daß die Pipettiernadelspitze (41) in den Spülnapf (30, 30', 30") eingeführt werden kann.

Die Formulierung "eingeführt werden kann" kann zum einen in ihrem wörtlichen Sinne verstanden werden, d.h. in der Bedeutung, dass es möglich ist, die Pipettiernadelspitze so tief wie gewünscht in den Spülnapf einzuführen. Vorzugsweise ist die Formulierung so zu verstehen, daß die Pipettiernadelspitze so in den Spülnapf eingeführt werden kann, dass die Pipettiernadelspitze die Innenwand des Spülnapfs nicht berührt.

Vorzugsweise sind der Meßkörper und oder die Spülstation der erfindungsgemäßen automatischen Pipettiervorrichtung austauschbar in dem Analysator angeordnet.

Bei einem erfindungsgemäßen Verfahren zum Spülen der Pipettiernadel einer automatischen Pipettiervorrichtung mit einer Spülstation der beschriebenen Art pumpt man bei einem vorgegebenen hydraulischen Ablaufwiderstand des Spülnapfablaufs eine bestimmte Spülflüssigkeit bei einer solchen Förderrate durch die Pipettiernadel in den Spülnapf, dass die Förderrate größer als die Ablaufrate der Spülflüssigkeit durch den Spülnapfablauf ist.

Vorzugsweise steigt die Spülflüssigkeit hierbei so weit, dass eine Höhe erreicht wird, die mindestens der vorgegebenen maximalen Eintauchtiefe (T) der Pipettiernadel in eine Proben- oder Reagenzienflüssigkeit während eines automatischen Pipettiervorgangs entspricht. Noch bevorzugter steigt die Spülflüssigkeit bis über die Oberkante des Spülnapfs.

Die vorliegende Erfindung umfaßt automatisierte Analysevorrichtungen mit einer Pipettiervorrichtung mit der beschriebenen Justage-Vorrichtung und wahlweise zusätzlich mit der beschriebenen Spülstation. Darüber hinaus kann die automatisierte Analysevorrichtung zusätzlich ein oder mehrere Elemente unter einem Analyserotor, einer Wärme erzeugenden Vorrichtung, einer Kälte erzeugenden Vorrichtung, einer optischen Messvorrichtung und einer optoelektronischen Lesevorrichtung zum Lesen eines optoelektronisch lesbaren Codes aufweisen.

Für Zwecke der ursprünglichen Offenbarung wird darauf hingewiesen, dass sämtliche Merkmale wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Weitere Merkmale oder Merkmalsgruppen sowie Beispiele für mögliche denkbare Merkmalskombinationen werden anhand der folgenden Beschreibung der beiliegenden Figuren offenbart bzw. veranschaulicht.

Hierbei zeigen:
- Figur 1: eine Vorrichtung für die automatisierte Analyse von Flüssigkeiten (Analysator) mit einer automatischen Pipettiervorrichtung mit einer Spülstation gemäß der vorliegenden Erfindung,
- Figur 2: eine schematische Darstellung der Justage-Vorrichtung für eine Pipettiernadel im Sinne der vorliegenden Erfindung und
- Figur 3: eine detaillierte Darstellung der erfindungsgemäßen Justage-Vorrichtung in Verbindung mit einer Pipettiernadelspülstation.

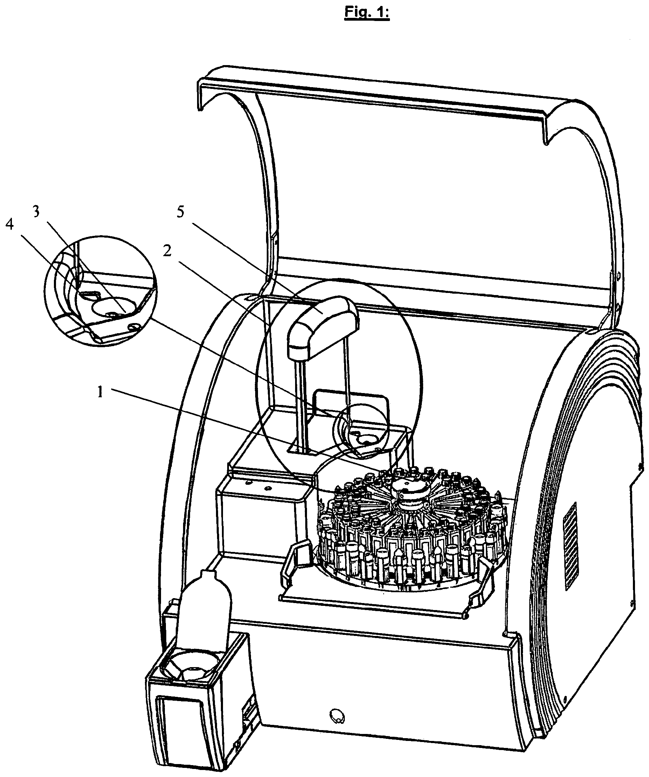

In Figur 1 ist eine Vorrichtung für die automatisierte Analyse von Flüssigkeiten (Analysator) dargestellt, die ein Karussell 1 für Flüssigkeitsbehälter und eine Pipettiervorrichtung 2 mit einem Pipettierarm 5 aufweist. Das Karussell 1 ist so angeordnet, dass es die Flüssigkeitsbehälter in den Arbeitsbereich des Pipettierarms 5 bewegen kann. Darüber hinaus ist im Arbeitsbereich des Pipettierarms 5 auch eine Spülstation 3 sowie eine Messvorrichtung 4 zum Bestimmen der exakten Position der Pipettiernadelspitze vorgesehen.

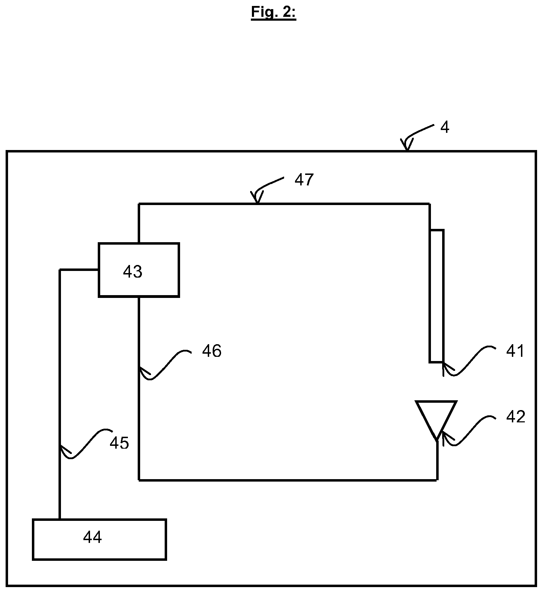

Figur 2 zeigt eine schematische Darstellung der erfindungsgemäßen Kapazitätsmessvorrichtung 4 mit Justage-Funktion. Die Kapazitätsmessvorrichtung 4 umfaßt den auf einer Arbeitsebene angeordnetenen Messkörper 42 und die darüber ausgerichtete Pipettiernadelspitze 41. Der Messkörper 42 und die Pipettiernadelspitze 41 sind über die Anschlüsse 46, 47 an eine Kapazitätsmesseinrichtung 43 zum Messen der Kapazität des von dem Messkörper 42 und der Pipettiernadelspitze 41 gebildeten Kondensators angeschlossen. Die Kapazitätsmesseinrichtung 43 ist über eine Verbindungsleitung 45 mit einer Datenverarbeitungseinheit 44 verbundenen, die aus den vorgegebenen Daten (z.B. Form und/oder Lage des Messkörpers 42) und den gemessenen Daten (z.B. elektrische Kapazität, Zeit) die exakte Position der Pipettiernadelspitze 41 bezogen auf eine horizontale Arbeitsebene bestimmen kann.

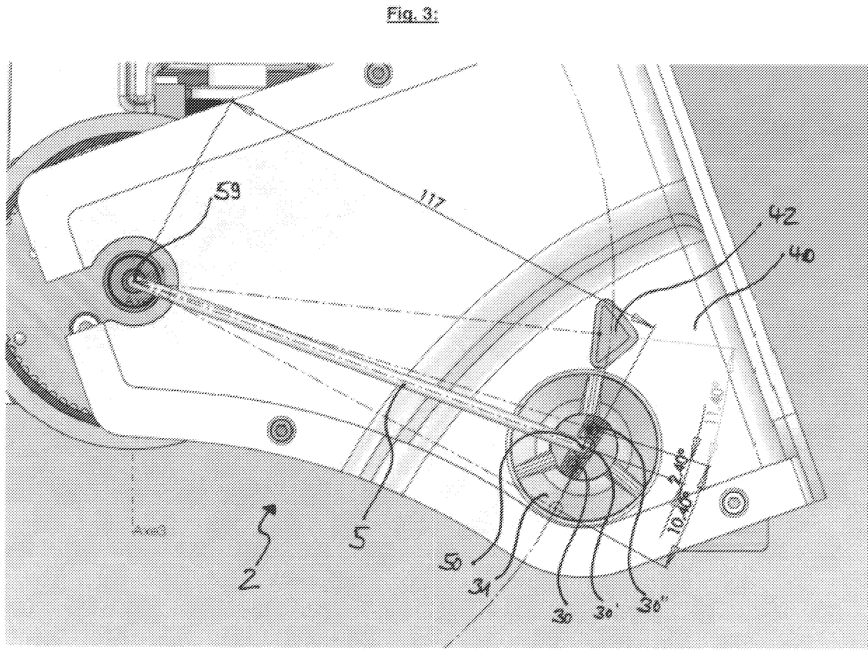

In Figur 3 ist eine erfindungsgemäße automatische Pipettiervorrichtung 2 mit einem um die Rotationsachse 59 schwenkbar angeordneten Pipettierarm 5, an dessen distalem Ende eine Aufnahmevorrichtung 50 für die Pipettiernadel angeordnet ist. Im Arbeitsbereich des Pipettierarms 5, d.h. auf einer mit einer Pipettiernadel ansteuerbaren Kreisbahn um die Rotationsachse 59, ist bei dieser Ausführungsform der automatischen Pipettiervorrichtung eine Spülstation mit drei in einer Reihe und in einer Auffangwanne 31 angeordneten Spülnäpfen 30, 30', 30" vorgesehen. Die Spülnäpfe 30, 30', 30" sind auf einer Geraden angeordnet, die die Kreisbahn, auf der sich die Pipettiernadelspitze bewegt, schneidet. Diese Gerade verläuft parallel zu einer Tangente der Kreisbahn, auf der sich die Pipettiernadelspitze bewegt.

Die Spülnäpfe sind so angeordnet, dass der Mittelpunkt des mittleren Spülnapfs 30' auf einer gedachten idealen Kreisbahn, auf der sich die Pipettiernadel bewegen soll, liegt. Der Mittelpunkt des Spülnapfs 30" liegt dagegen auf einer Kreisbahn, die einen von der idealen Kreisbahn abweichenden größeren Radius aufweist. Der Mittelpunkt des Spülnapfs 30 liegt auf einer Kreisbahn, die einen von der idealen Kreisbahn abweichenden kleineren Radius aufweist. Die Spülnäpfe sind bezogen auf eine Bewegung entlang der gedachten idealen Kreisbahn der Pipettiernadel hintereinander versetzt angeordnet.

Der Umfang der Spülnapföffnungen ist bei der gegebenen Anordnung der Spülnäpfe 30, 30', 30" so gewählt, dass die Pipettiernadel in jedem Fall in einen der Spülnäpfe 30, 30', 30" eingeführt werden kann, sofern sich die Pipettiernadelspitze auf einer Kreisbahn, die zwischen dem äußersten Rand des äußeren Spülnapfs 30" und dem innersten Rand des inneren Spülnapfs 30 liegt, bewegt.

Darüber hinaus ist bei dieser Pipettiervorrichtung ebenfalls auf einer Kreisbahn um die Rotationsachse 59, welche mit der Pipettiernadel angesteuert werden kann, ein Messkörper 42 einer Messvorrichtung zum Bestimmen der horizontalen Position der Pipettiernadelspitze vorgesehen. Der Meßkörper 42 ist in einer dreieckförmigen Vertiefung in der Arbeitsfläche 40 vorgesehen. Der Meßkörper 42 hat ebenfalls den Umfang eines Dreiecks, da er sich entlang des Umfangs der Vertiefung erstreckt und dabei einen Raum mit derselben Umfangsform, wie sie die Vertiefung aufweist umspannt. Der Messkörper 42 bildet hierbei eine Meßkante, an die eine in die Vertiefung eingeführte Pipettiernadel herangeführt werden kann.

Der Messkörper 42 und die elektrisch leitfähige Pipettiernadel bilden, wenn sie aufeinander ausgerichtet sind, einen Kondensator, der mit einer Kapazitätsmesseinrichtung verbunden ist. Für die Messung wird die Pipettiernadel in den vom Messkörper 42 umspannten Bereich eingeführt und so lange in eine Richtung bewegt, bis eine Kapazität bestimmter Größe festgestellt wird. Alternativ kann der die Pipettiernadel auf auch Kontakt gefahren werden, da heißt so weit, bis sie auf die Kante des Messkörpers stößt. Anschließend wird die Pipettiernadel in die entgegengesetzte Richtung bewegt, bis eine Kapazität bestimmter Größe festgestellt wird bzw. bis sie die Kante des Messkörpers berührt. Aus den Signalen und anhand der zwischen den beiden Endpunkten zurück gelegten Strecke kann eine im Analysator vorgesehene Datenverarbeitungseinheit die exakte horizontale Position der Pipettiernadelspitze feststellen. Etwas genauer kann festgestellt werden, auf welcher exakten Kreisbahn sich die Pipettiernadelspitze bewegt. Durch diese Information kann eine Auswahl getroffen werden, in welchen der Spülnäpfe 30, 30', 30" die Pipettiernadelspitze am besten eingeführt wird, um die gewünschte Spülwirkung zu erreichen.

### Bezugszeichen:

- 1: Karussell für Flüssigkeitsbehälter
- 2: Pipettiervorrichtung
- 3: Spülstation
- 4: Kapazitätsmessvorrichtung
- 5: Pipettierarm

- 27: Pipettiernadel

- 30: Spülnapf
- 31: Auffangwanne
- 35: Spülnapfanordnung

- 40: Arbeitsfläche
- 41: Pipettiernadelspitze
- 42: Messkörper
- 43: Kapazitätsmesseinrichtung
- 44: Datenverarbeitungseinheit
- 45: Verbindung
- 46: Anschluß
- 47: Anschluß

- 50: Aufnahmevorrichtung für Pipettiernadel
- 59: Rotationsachse

## Patentansprüche

1. Automatische Pipettiervorrichtung (2) mit einer in einem dreidimensionalen Arbeitsbereich auf wenigstens einer horizontalen Arbeitsebene (40) bewegbaren, im wesentlichen senkrecht zu der horizontalen Arbeitsebene (40) angeordneten Pipettiernadel (27) aus elektrisch leitfähigem Material, und mit einer Messvorrichtung (4) zum Bestimmen der exakten Position der Pipettiernadelspitze (41) auf der wenigstens einen horizontalen Arbeitsebene (40), wobei die Messvorrichtung (4)
a) wenigstens einen elektrisch leitfähigen Messkörper umfaßt, der auf der wenigstens einen horizontalen Arbeitsebene angeordnet ist, und
b) eine mit einem Kondensator verbundene Kapazitätsmesseinrichtung zum Messen der elektrischen Kapazität des Kondensators umfaßt,
wobei die Pipettiernadelspitze eine erste Elektrode des Kondensators bildet und der wenigstens eine elektrisch leitfähige Messkörper eine zweite Elektrode des Kondensators bildet, **dadurch gekennzeichnet, daß** entweder
- die Messvorrichtung (4) genau einen elektrisch leitfähigen Messkörper (42) umfaßt, der eine sich auf der wenigstens einen horizontalen Arbeitsebene (40) erstreckende Oberfläche (F) aufweist, wobei die Oberfläche (F) ein Dreieck, ein Trapez, eine Raute oder ein Halbkreis ist, oder
- die Messvorrichtung (4) wenigstens einen elektrisch leitfähigen Messkörper (42) umfaßt, der in einer Vertiefung in einer sich auf der wenigstens einen horizontalen Arbeitsebene (40) im Arbeitsbereich erstreckenden Fläche angeordnet ist, wobei die Vertiefung in Draufsicht von oben einen dreiecks-, trapez- oder halbkreisförmigen Umfang aufweist, und wobei der wenigstens eine Messkörper (42) sich entlang des Umfangs der Vertiefung erstreckt und dabei einen Raum mit derselben Umfangsform, wie sie die Vertiefung aufweist umspannt, wobei der Messkörper (42) eine Meßkante bildet, an die eine in die Vertiefung eingeführte Pipettiernadel herangeführt werden kann.

2. Pipettiervorrichtung (2) nach Anspruch 1, **dadurch gekennzeichnet, dass** die Pipettiernadel an Masse angeschlossen ist.

3. Pipettiervorrichtung (2) nach einem der Ansprüche 1 oder 2, **dadurch gekennzeichnet, dass** die Kapazitätsmesseinrichtung (43) mit einer Datenverarbeitungseinheit (44) zum Berechnen der exakten Position der Pipettiernadelspitze (41) auf der wenigstens einen horizontalen Arbeitsebene (40) verbunden ist.

4. Pipettiervorrichtung (2) nach einem der Ansprüche 1 bis 3, **dadurch gekennzeichnet, daß** sie eine Spülstation (3) zum Spülen der Pipettiernadel (27) aufweist, wobei die Spülstation (3) wenigstens einen nach oben offenen Spülnapf (30) umfasst, der eine Höhe (H) aufweist, die mindestens einer vorgegebenen maximalen Eintauchtiefe (T) der Pipettiernadel (27) in eine Proben- oder Reagenzienflüssigkeit während eines automatischen Pipettiervorgangs entspricht, und dessen Innenumfang (UW) größer als der Außenumfang (UP) der Pipettiernadel (27) ist, wobei der Innenumfang (UW) des Spülnapfs (30) höchstens dem 3-fachen, dem 2,5-fachen, dem 2-fachen oder dem 1,5-fachen Außenumfang (UP) der Pipettiernadel (27) entspricht.

5. Pipettiervorrichtung (2) nach Anspruch 4, **dadurch gekennzeichnet, daß** die Spülstation (3) wenigstens 2 nebeneinander angeordnete, vorzugsweise wenigstens 3 in einer Reihe angeordnete Spülnäpfe (30) umfaßt.

6. Pipettiervorrichtung (2) nach einem der Ansprüche 4 oder 5, **dadurch gekennzeichnet, daß** in dem Spülnapfboden (32) oder unmittelbar darüber ein Spülnapfablauf (33) angeordnet ist, wobei bei einer gegebenen Förderrate (Volumen pro Zeit) einer bestimmten Spülflüssigkeit durch die Pipettiernadel (27) in den Spülnapf (30) der hydraulische Ablaufwiderstand des Spülnapablaufs so gewählt ist, dass die Förderrate der Spülflüssigkeit größer als die Ablaufrate (Volumen pro Zeit) der Spülflüssigkeit durch den Spülnapfablauf (33) ist.

7. Automatisierte Analysevorrichtung mit einer Pipettiervorrichtung (2) nach einem der Ansprüche Ansprüche 1 bis 6, wobei die automatisierte Analysevorrichtung zusätzlich ein oder mehrere Elemente unter einem Analyserotor, einer Wärme erzeugenden Vorrichtung, einer Kälte erzeugenden Vorrichtung, einer optischen Messvorrichtung und einer optoelektronischen Lesevorrichtung zum Lesen eines optoelektronisch lesbaren Codes aufweist.

8. Verfahren zum Bestimmen der exakten Position der Pipettiernadelspitze (41) auf wenigstens einer horizontalen Arbeitsebene (40) der Pipettiernadel (27) einer automatischen Pipettiervorrichtung (2) nach einem der Ansprüche 1 bis 7, bei dem man
a) die im wesentlichen senkrecht zu der horizontalen Arbeitsebene (40) angeordnete Pipettiernadel (27) aus elektrisch leitfähigem Material über die sich auf der horizontalen Arbeitsebene (40) erstreckende Oberfläche (F) des elektrisch leitfähigen Messkörpers (42) bewegt oder die Pipettiernadel (27) in die Vertiefung einführt und an die von dem Messkörper (42) gebildete Messkante heranführt,
b) eine zwischen der Pipettiernadelspitze (41) und dem elektrisch leitfähigen Messkörper (42) auftretende Kapazität mißt und
c) anhand der Zeit, über die eine Kapazität gemessen wird, anhand der Geschwindigkeit der Bewegung der Pipettiernadel (27) über den elektrisch leitfähigen Messkörper (42) und anhand der Anordnung oder der Form der Oberfläche (F) des elektrisch leitfähigen Messkörpers (42) die Kreisbahn, auf der sich die Pipettiernadelspitze (41) bewegt, bestimmt.

9. Verfahren zum Spülen der Pipettiernadelspitze (41) einer automatischen Pipettiervorrichtung (2), bei dem man
a) die Bahn, auf der sich die Pipettiernadelspitze (41) bewegt, nach dem Verfahren von Anspruch 8 bestimmt und
b) anhand der in Stufe a) bestimmten Bahn festlegt, ob, wie und welcher Spülnapf (30, 30', 30") so angesteuert werden kann, daß die Pipettiernadelspitze (41) in den Spülnapf (30, 30', 30") eingeführt werden kann.

## Claims

1. Automatic pipetting device (2) with a pipetting needle (27) made of electrically conducting material, movable in a three-dimensional working zone in at least one horizontal working plane (40), and which is arranged essentially perpendicularly to the horizontal working plane (40), and with a measuring device (4) for determining the exact position of the pipetting needle tip (41) in the at least one horizontal working plane (40), wherein the measuring device (4)
a) comprises at least one electrically conducting measuring body, which is arranged in the at least one horizontal working plane, and
b) comprises a capacitance measuring device connected to a capacitor for measuring the electrical capacitance of the capacitor,
wherein the pipetting needle tip forms a first electrode of the capacitor and the at least one electrically conducting measuring body forms a second electrode of the capacitor, **characterized in that** either
- the measuring device (4) comprises exactly one electrically conducting measuring body (42), which has a surface (F) extending in the at least one horizontal working plane (40), wherein the surface (F) is a triangle, a trapezium, a rhombus or a semicircle, or
- the measuring device (4) comprises at least one electrically conducting measuring body (42), which is arranged in a recess in a surface extending in the at least one horizontal working plane (40) in the working zone, wherein the recess has, in top view, a triangular, trapezoidal or semicircular perimeter, and wherein the at least one measuring body (42) extends along the perimeter of the recess, thereby enclosing a space with the same peripheral shape as the recess, wherein the measuring body (42) forms a measuring edge, onto which a pipetting needle introduced into the recess can be directed.

2. Pipetting device (2) according to claim 1, **characterized in that** the pipetting needle is earthed.

3. Pipetting device (2) according to one of claims 1 or 2, **characterized in that** the capacitance measuring device (43) is connected to a data processing unit (44) for calculating the exact position of the pipetting needle tip (41) on the at least one horizontal working plane (40).

4. Pipetting device (2) according to one of claims 1 to 3, **characterized in that** it has a rinsing station (3) for rinsing the pipetting needle (27), wherein the rinsing station (3) comprises at least one rinsing bowl (30) open at the top, which has a height (H), which corresponds to at least a specified maximum depth of immersion (T) of the pipetting needle (27) in a sample or reagent liquid during an automatic pipetting operation, and whose inner circumference (UW) is greater than the outer circumference (UP) of the pipetting needle (27), wherein the inner circumference (UW) of the rinsing bowl (30) corresponds at most to 3 times, 2.5 times, 2 times or 1.5 times the outer circumference (UP) of the pipetting needle (27).

5. Pipetting device (2) according to claim 4, **characterized in that** the rinsing station (3) comprises at least 2 rinsing bowls (30) arranged side by side, preferably at least 3 arranged in a row.

6. Pipetting device (2) according to one of claims 4 or 5, **characterized in that** a rinsing bowl drain (33) is arranged in the base of the rinsing bowl (32) or directly above it, wherein at a given feed rate (volume in unit time) of a specified rinsing liquid through the pipetting needle (27) into the rinsing bowl (30) the hydraulic discharge resistance of the rinsing bowl drain is selected so that the feed rate of the rinsing liquid is greater than the discharge rate (volume in unit time) of the rinsing liquid through the rinsing bowl drain (33).

7. Automated analysis device with a pipetting device (2) according to one of claims 1 to 6, wherein the automated analysis device additionally has one or more of the following elements: an analysis rotor, a heater, a cooler, an optical measuring device and an optoelectronic reading device for reading an optoelectronically readable code.

8. Method of determining the exact position of the pipetting needle tip (41) in at least one horizontal working plane (40) of the pipetting needle (27) of an automatic pipetting device (2) according to one of claims 1 to 7, in which
a) the pipetting needle (27) made of electrically conducting material arranged essentially perpendicularly to the horizontal working plane (40) is moved over the surface (F) of the electrically conducting measuring body (42) extending over the horizontal working plane (40) or the pipetting needle (27) is introduced into the recess and is directed onto the measuring edge formed by the measuring body (42),
b) a capacitance between the pipetting needle tip (41) and the electrically conducting measuring body (42) is measured and
c) the circular path on which the pipetting needle tip (41) moves is determined on the basis of the time during which a capacitance is measured, on the basis of the speed of movement of the pipetting needle (27) over the electrically conducting measuring body (42) and on the basis of the arrangement or the form of the surface (F) of the electrically conducting measuring body (42).

9. Method of rinsing the pipetting needle tip (41) of an automatic pipetting device (2), in which
a) the path on which the pipetting needle tip (41) moves is determined by the method of claim 8 and
b) based on the path determined in step a) it is established whether, how and which rinsing bowl (30, 30', 30") can be headed for so that the pipetting needle tip (41) can be introduced into the rinsing bowl (30, 30', 30").

## Revendications

1. Dispositif automatique de prélèvement par pipette (2) avec une aiguille de prélèvement par pipette (27) en un matériau électriquement conducteur, apte à être déplacée dans une zone de travail tridimensionnelle sur au moins un plan de travail (40) horizontal et disposée sensiblement perpendiculairement au plan de travail (40) horizontal, et avec un dispositif de mesure (4) pour déterminer la position exacte de la pointe (41) de l'aiguille de prélèvement par pipette sur ledit au moins un plan de travail (40) horizontal, le dispositif de mesure (4) comprenant
a) au moins un corps de mesure électriquement conducteur qui est disposé sur ledit au moins un plan de travail horizontal et
b) un dispositif de mesure de capacité relié à un condensateur, pour mesurer la capacité électrique du condensateur,
la pointe de l'aiguille de prélèvement par pipette formant une première électrode du condensateur et ledit au moins un corps de mesure électriquement conducteur formant une seconde électrode du condensateur,
**caractérisé en ce que**
- soit le dispositif de mesure (4) comprend exactement un corps de mesure électriquement conducteur (42) qui comprend une surface (F) s'étendant sur ledit au moins un plan de travail (40) horizontal, la surface (F) étant une triangle, un trapèze, un losange ou un demi-cercle,
- soit le dispositif de mesure (4) comprend au moins un corps de mesure électriquement conducteur (42) qui est disposé dans un renfoncement dans une aire s'étendant dans la zone de travail sur ledit au moins un plan de travail (40) horizontal, le renfoncement présentant, en une vue de dessus, un pourtour en forme de triangle, de trapèze ou de demi-cercle, et ledit au moins un corps de mesure (42) s'étendant le long du pourtour du renfoncement et entourant un volume ayant la même forme de pourtour que le renfoncement, le corps de mesure (42) formant un bord de mesure auquel une aiguille de prélèvement par pipette introduite dans le renfoncement peut être rapprochée.

2. Dispositif de prélèvement par pipette (2) selon la revendication 1, **caractérisé en ce que** l'aiguille de prélèvement par pipette est raccordée à la masse.

3. Dispositif de prélèvement par pipette (2) selon l'une des revendications 1 ou 2, **caractérisé en ce que** le dispositif de mesure de capacité (43) est relié à une unité de traitement de données (44) pour calculer la position exacte de la pointe (41) de l'aiguille de prélèvement par pipette sur ledit au moins un plan de travail (40) horizontal.

4. Dispositif de prélèvement par pipette (2) selon l'une des revendications 1 à 3, **caractérisé en ce qu'**il comprend une station de rinçage (3) pour rincer l'aiguille de prélèvement par pipette (27), la station de rinçage (3) comprenant au moins un bol de rinçage (30) ouvert vers le haut qui présente une hauteur (H) qui correspond au moins à une profondeur d'immersion (T) maximale prédéterminée de l'aiguille de prélèvement par pipette (27) dans un liquide d'échantillon ou de réactifs pendant un prélèvement automatique par pipette, et dont le pourtour intérieur (UW) est supérieur au pourtour extérieur (UP) de l'aiguille de prélèvement par pipette (27), le pourtour intérieur (UW) du bol de rinçage (30) correspondant au maximum au triple, à deux fois et demie, au double ou à une fois et demie du pourtour extérieur (UP) de l'aiguille de prélèvement par pipette (27).

5. Dispositif de prélèvement par pipette (2) selon la revendication 4, **caractérisé en ce que** la station de rinçage (3) comprend au moins deux bols de rinçage (30) disposés l'un à côté de l'autre, de préférence au moins trois bols de rinçage (30) disposés en une rangée.

6. Dispositif de prélèvement par pipette (2) selon l'une des revendications 4 ou 5, **caractérisé en ce qu'**un écoulement de bol de rinçage (33) est disposé au fond (32) du bol de rinçage ou immédiatement au-dessus, la résistance hydraulique d'écoulement de l'écoulement de bol de rinçage étant choisie pour un débit d'alimentation donné (volume par temps) d'un liquide de rinçage déterminé passant par l'aiguille de prélèvement par pipette (27) dans le bol de rinçage (30), de façon que le débit d'alimentation de liquide de rinçage soit supérieur au débit d'écoulement (volume par temps) du liquide de rinçage passant par l'écoulement de bol de rinçage (33).

7. Dispositif d'analyse automatisé comportant un dispositif de prélèvement par pipette (2) selon l'une des revendications 1 à 6, le dispositif d'analyse automatisé comprenant en outre un ou plusieurs éléments parmi un rotor d'analyse, un dispositif engendrant de la chaleur, un dispositif engendrant du froid, un dispositif de mesure optique et un dispositif de lecture optoélectronique pour la lecture d'un code pouvant être lu de manière optoélectronique.

8. Procédé pour déterminer la position exacte, sur au moins un plan de travail (40) horizontal, de la pointe (41) de l'aiguille de prélèvement par pipette (27) d'un dispositif automatique de prélèvement par pipette (2) selon l'une des revendications 1 à 7, selon lequel on
a) déplace l'aiguille de prélèvement par pipette (27) en un matériau électriquement conducteur et disposée sensiblement perpendiculairement au plan de travail (40) horizontal, sur la surface (F) du corps de mesure (42) électriquement conducteur s'étendant sur le plan de travail (40) horizontal, ou l'on introduit l'aguille de prélèvement par pipette (27) dans le renfoncement et on la rapproche au bord de mesure formé par le corps de mesure (42),
b) mesure la capacité apparaissant entre la pointe (41) de l'aiguille de prélèvement par pipette et le corps de mesure (42) électriquement conducteur et
c) détermine le parcourt circulaire sur lequel se déplace la pointe (41) de l'aiguille de prélèvement par pipette, sur la base du temps pendant lequel une capacité est mesurée, sur la base de la vitesse de déplacement de l'aguille de prélèvement par pipette (27) sur le corps de mesure (42) électriquement conducteur et sur la base de la disposition ou de la forme de la surface (F) du corps de mesure (42) électriquement conducteur.

9. Procédé de rinçage de la pointe (41) de l'aiguille de prélèvement par pipette d'un dispositif automatique de prélèvement par pipette (2), selon lequel on
a) détermine le parcourt sur lequel la pointe (41) de l'aiguille de prélèvement par pipette se déplace, selon le procédé selon la revendication 8 et
b) détermine sur la base du parcourt déterminé à l'étape a), si, comment et quel bol de rinçage (30, 30', 30") peut être approché de façon que la pointe (41) de l'aiguille de prélèvement par pipette puisse être introduite dans le bol de rinçage (30, 30', 30").
